# EUROPÄISCHE PATENTANMELDUNG

(11) **EP 0 575 704 A1**
(43) Veröffentlichungstag der Anmeldung: **29.12.1993**
(21) Anmeldenummer: 93104803.7
(22) Anmeldetag: 24.03.1993
(51) Int. Cl.: B01D 61/00, B01D 67/00, C08G 75/23

(54) **Verfahren zum Trocknen poröser Ultrafiltrationsmembranen**

(30) Priorität: 23.06.1992 DE 4220441
(71) Anmelder: GAMBRO DIALYSATOREN GmbH & CO. KG, D-72379 Hechingen (DE)
(72) Erfinder: McDonogh, Richard Marc, W-7000 Stuttgart 1 (DE); Göhl, Hermann Joseph, Dipl.-Ing., W-7457 Bisingen-Zimmern (DE); Buck, Reinhold Johann, Dipl.-Ing., W-7952 Alleshausen (DE)
(74) Vertreter: Weber, Dieter, Dr.

(57) **Zusammenfassung**

Ein Verfahren zum Trocknen poröser Ultrafiltrationsmembranen unter Anwendung von Wärme und gegebenenfalls zusätzlich Unterdruck ist dadurch gekennzeichnet, daß man vor der Wärmeanwendung die Poren der Membran wenigstens teilweise mit einer Lösung eines die Membran quellenden, wasserlöslichen organischen Feststoffes mit einem Schmelzpunkt oberhalb 35°C in einem mit Wasser vollständig mischbaren, die Membranstruktur nicht verändernden organischen Lösungsmittel füllt.

## Beschreibung

Ultrafiltrationsmembranen werden üblicherweise durch Fällung bzw. eine Phaseninversionsmethode in einem wäßrigen Medium hergestellt. Als Ergebnis heirvon bekommt man poröse Membranen, deren Poren mit Wasser gefüllt sind. Zur Lagerung und weiteren Verarbeitung der Membranen zu einem Modul ist es allgemein erforderlich oder erwünscht, sie im trockenen Zustand vorliegen zu haben. In diesem Zustand kann die Membran wesentlich leichter gehandhabt und weiterverarbeitet werden.

Normale Trocknungsverfahren unter Anwendung von Wärme und gegebenenfalls zusätzlich unter Druck ergeben häufig unerwünschte starke Veränderungen der Porenstruktur und demzufolge der Filtrationseigenschaften. Bei Membranen aus schwach hydrophilen oder mehr oder weniger hydrophoben Materialien kommt hinzu, daß diese nach dem Trocknen nur schwierig durch einfache Berührung mit Wasser wieder zu befeuchten sind, so daß hierfür aufwendige mehrstufige Verfahren unter Verwendung unterschiedlicher Lösungsmittel erforderlich sind.

In der Vergangenheit versuchte man, diese Probleme durch Verdrängung des Wassers in den Poren der Membran mit Hilfe von Glycerin zu lösen. Diese Methode aber hat den Nachteil, daß glycerinhaltige Membranen nur schlecht verarbeitbar sind, daß große Mengen an Glycerin (ca. 30 bis 40 g/m²) verwendet werden müssen und daß das die Membran bildende Polymer da Glycerin absorbiert, was es schwierig macht, dieses später durch Waschen aus der Membran zu entfernen.

Die der Erfindung zugrundeliegende Aufgabe bestand somit darin, ein Trockenverfahren für Ultrafiltrationsmembranen zu bekommen, das die obigen Nachteile des Standes der Technik beseitigt und keine Veränderungen der Membraneigenschaften durch die Anwendung von Wärme beim Trocknen hervorruft und/oder die Wiederbenetzung mit Wasser oder wäßrigen Lösungen nach dem Trocknen erliechtert.

Das erfindungsgemäße Verfahren zum Trocknen poröser Ultrafiltrationsmembranen unter Anwendung von Wärme und gegebenenfalls zusätzlich Unterdruck ist dadurch gekennzeichnet, daß man vor der Wärmeanwendung die Poren der Membranen wenigstens teilweise mit einer Lösung eines die Membranen quellenden, wasserlöslichen organischen Feststoffes mit einem Schmelzpunkt oberhalb 35 °C in einem mit Wasser vollständig mischbaren, die Membranstrucktur nicht verändernden organischen Lösungsmittel füllt.

Praktisch geht man dabei so vor, daß man die erzeugte feuchte Membran in die genannte Lösung legt und sich mit der Lösung vollsaugen läßt. Hierzu werden gewöhnlich mehrere Stunden benötigt. Beispielsweise genügen für eine Sättigung der Poren der Membran mit einer Lösung von Ascorbinsäure in Ethanol vier Stunden.

Nach dem Vollsaugen der Membran wird diese durch Steigerung der Temperatur getrocknet, wobei gegebenenfalls verminderter Druck angewendet wird, um den Trocknungsvorgang zu unterstützen. Beim Trocknen der Membran kristallisiert der organische Feststoff in den Poren aus oder wird darin ausgefällt, kann aber wegen seiner Wasserlöslichkeit später aus den Poren leicht wieder mit Wasser herausgewaschen werden.

Überraschend ist, daß durch die erfindungsgemäße Anwendung der genannten Lösung vor dem Erwärmen der Membran die Membran ihre ursprünglichen Eigenschaften vor dem Trocknen, insbesondere Permeabilität und Porengroßenverteilung behält. Außerdem bekommt man durch das erfindungsgemäße Verfahren eine leichte, schnelle und vollständige Wiederbenetzbarkeit der Membran mit Wasser selbst bei Membranen aus hydrophoben Materialien.

Dieser technische Effekt ist auf eine synergistische Wirkung der Kombination des gelösten organischen Feststoffes mit dem organischen Lösungsmittel zurückzuführen, da nur die Kombination beider beim Trocknen die Membraneigenschaften bewahrt. Weder das organische Lösungsmittel allein noch der organische Feststoff in wäßriger Lösung sind hierzu in der Lage, sondern in beiden Fällen werden die Poreneigenschaften der Membran durch das Trocknen wesentlich verändert.

Die erfindungsgemäß vor dem Trocknen verwendete Lösung kann leicht in die Membranporen diffundieren. Vorzugsweise verwendet man als wasserlöslichen organischen Feststoff einen niedermolekularen, zweckmäßig mit einem Molekulargewicht im Bereich zwischen 100 und 500. Die verwendeten organischen Feststoffe werden in der Polymermatrix nicht leicht absorbiert im Gegensatz zu organischen Flüssigkeiten, wie Glycerin, die in wesentlichem Umfang von dem Membranpolymer aufgenommen werden und daher schwierig beim Wiederbefeuchten entfernbar sind.

Die verwendeten organischen Feststoffe entfalten ihre Wechselwirkung mit der Polymermatrix, ohne große Mengen von Wasser zu binden und so zurückzuhalten. Das Quellen des Polymers öffnet die physikalische Struktur des Polymemetzwerkes, so daß die Moleküle des verwendeten organischen Feststoffes besser eindringen können. Zweckmäßig füllt man beim erfindungsgemäßen Verfahren die Poren der Membran vollständig mit der genannten Lösung.

Es ist günstig, als wasserlöslichen organischen Feststoff in dem organischen Lösungsmittel einem solchen mit begrenzter Löslichkeit und außerdem in hoher Konzenration und möglichst eine gesattigte Lösung zu verwenden, um beim Trocknen eine möglichst rasche Ausfällung des Feststoffes in den Poren der Membran zu bewirken. Auf diese Weise wird des Wachstum großer Kristalle verhinder.

Als wasserlösliche organische Feststoffe werden zweckmäßig organische Säuren oder deren Alkalisalze, insbesondere Natrium- oder Kaliumsalze verwendet. Zweckmäßige Beispeile heirfür sind Ascorbinsäure, Zitronensaure und deren Alkalisalze, wie Natriumascorbat, Natriumcitrat, Natriumdihydrogencitrat oder Dinatriumhydrogencitrat. Eine andere brauchbare organisch Säure ist Sorbinsäure, deren Alkalisalze ebenfalls verwendbar sind.

Ein anderer erfindungsgemäß bevorzugt verwendbarer organischer Feststoff ist beispielsweise Polyvinylpyrrolidon (PVP), der beispielsweise zweckmäßig in Verbindung mit Polyethersulfon-, Polyetherimid- oder Polyamidmembranen eingesetzt werden kann.

Der erfindungsgemäß verwendete organische Feststoff soll beim Trocknen in den Poren der Membran nicht schmelzen, sondern in festem Zustand verbleiben. Der Feststoff wird daher nach seinem Schmelzpunkt in Abhängigkeit von der anzuwendenden Trockentemperatur ausgewählt. Da beim Trocknen mindestens 35 °C angewendet werden, muß erfindungsgemäß der Feststoff einen Schmelzpunkt oberhalb dieser Temperatur haben. Vorzugsweise liegt der Schmelzpunkt des Feststoffes über 40 °C, da die Trocknungstemperaturen häufig bei 40 °C oder höher liegen.

Das erfindungsgemäß verwendete organische Lösungsmittel wird zweckmäßig so ausgewählt, daß der verwendete organische Feststoff in diesem Lösungsmittel nicht unbegrenzt löslich ist, sondern eine Löslichkeitsgrenze hat, was beim Trocknen die rasche Ausfällung in den Poren begünstigt. Bevorzugt verwendete organische Lösungsmittel sind niedermolekulare Alkohole, wie Methanol oder Ethanol, insbesondere Ethanol.

Die Verwendung von Milchsäure, deren Salzen und Derivaten in Alkohol liegt außerhalb der Erfindung.

Des erfindungsgemäße Verfahren ist an sich zur Trocknung beliebiger Ultrafiltrationsmembranen anwendbar. Besonders eignet sich des Verfahren für Membranen aus Polyethersulfon, Polyetherimid, Polysulfon oder Polyamid, jeweils gegebenenfalls im Gemisch mit Polyvinylpyrrolidon.

Durch die folgenden Beispiele wird die Erfindung weiter erläutert.

### Beispiel 1

Lösungen von Citronensäure in Ethanol mit den in der nachfolgenden Tabelle 1 angegebenen Konzentrationen wurden verwendet, um mit den in der Tabelle 1 angegebenen Tränkzeiten Polyethersulfonmembranen zu tränken. Anschließend wurden die Membranen bei 40 °C während der in Tabelle 1 angegebenen Trocknungszeiten getrocknet.

Die Wasserpermeabilität der getrockneten Membranen bei 0,2 bar vor und nach dem Trocknen wurde ermittelt. Aus beiden Werten wurde die Erhaltung der Eigenschaften prozentual errechnet, wobei festzustellen ist, daß Permeabilität insbesondere bei langen Tränkzeiten durch das Trocknen zunahm.

Die Trocknungszeiten wurden sehr lange gewählt, um ein vollständiges Trocknen zu gewährleisten. In der Praxis können kürzere Trocknungszeiten verwendet werden.

**Tabelle 1**

| **Citronensäurekonzentration (Gew.-% in Ethanol)** | **Tränkzeit (h)** | **Trocknungszeit bei 40 °C (h)** | **Wasserpermeabilität (ml/mm Hg. h. m²)** | | **Beibehaltung (%)** |
|---|---|---|---|---|---|
| | | | **vor dem Trocknen** | **nach dem Trocknen** | |
| 35 | 5 | 11 | 250 | 215 | 86 |
| 35 | 5 | 11 | 80 | 61 | 77 |
| 35 | 5 | 11 | 902 | 902 | 100 |
| 35 | 5 | 11 | 81 | 82 | 101 |
| 35 | 7 | 15 | 137 | 261 | 191 |
| 35 | 7 | 15 | 65 | 94 | 144 |
| 20 | 4 | 10 | 1350 | 1200 | 89 |

### Beispiel 2

In diesem Beispiel wurde zum Tränken von Polyethersulfonmembranen eine gesättigte Lösung von Ascorbinsäure in Ethanol (Konzentration 5,2 %) verwendet. In der Tabelle 2 sind die Tränkzeiten und die Trocknungszeiten angegeben. Die Trocknung erfolgte bei 40 °C und Atmosphärendruck, wie im Beispiel 1. Die Bestimmung der Wasserpermeabilität vor und nach dem Trocknen und die Erhaltung der Eigenschaften wurden wie im Beispiel 1 ermittelt. Tabelle 2 zeigt, daß bei allen Proben mindestens eine 100 %ige Erhaltung der Permeabilität erzielt wurde.

**Tabelle 2**

| **Tränkzeit (h)** | **Trocknungszeit bei 40 °C (h)** | **Wasserpermeabilität (ml/mm Hg. h. m²)** | | **Beibehaltung (%)** |
|---|---|---|---|---|
| | | **vor dem Trocknen** | **nach dem Trocknen** | |
| 4 | 21 | 1273 | 1734 | 136 |
| 4 | 21 | 2361 | 3634 | 156 |
| 4 | 10 | 1320 | 1600 | 126 |
| 2 | 10 | 260 | 364 | 140 |
| 2 | 10 | 150 | 158 | 106 |
| 2 | 10 | 627 | 694 | 111 |
| 2 | 10 | 408 | 542 | 133 |
| 2 | 10 | 727 | 819 | 113 |
| 2 | 10 | 632 | 1030 | 163 |

## Patentansprüche

1. Verfahren zum Trocknen poröser Ultrafiltrationsmembranen unter Anwendung von Wärme und gegebenenfalls zusätzlich Unterdruck, **dadurch gekennzeichnet**, daß man vor der Wärmeanwendung die Poren der Membranen wenigstens teilweise mit einer Lösung eines die Membranen quellenden, wasserlöslichen organischen Feststoffes mit einem Schmelzpunkt oberhalb 35 °C in einem mit Wasser vollständig mischbaren, die Membranstruktur nicht verändernden organischen Lösungsmittel füllt.

2. Verfahren nach Anspruch 1, **dadurch gekennzeichnet**, daß man einen niedermolekularen organischen Feststoff, vorzugsweise einen Feststoff mit einem Molekulargewicht im Bereich zwischen 100 und 500 verwendet.

3. Verfahren nach Anspruch 1 oder 2, **dadurch gekennzeichnet**, daß man einen organischen Feststoff mit einem Schmelzpunkt oberhalb 40 °C verwendet.

4. Verfahren nach einem der Ansprüche 1 bis 3, **dadurch gekennzeichnet**, daß man eine im wesentlichen gesättigte Lösung des organischen Feststoffes verwendet.

5. Verfahren nach einem der Ansprüche 1 bis 4, **dadurch gekennzeichnet**, daß man die Poren der Membranen mit der Lösung im wesentlichen vollständig füllt.

6. Verfahren nach einem der Ansprüche 1 bis 5, **dadurch gekennzeichnet**, daß man als organischen Feststoff eine organische Säure oder deren Alkalisalz verwendet.

7. Verfahren nach Anspruch 6, **dadurch gekennzeichnet**, daß man als organischen Feststoff Ascorbinsäure, Citronensäure, Sorbinsäure oder deren Alkalisalze verwendet.

8. Verfahren nach einem der Ansprüche 1 bis 7, **dadurch gekennzeichnet**, daß man als organischen Feststoff Polyvinylpyrrolidon verwendet.

9. Verfahren nach einem der Ansprüche 1 bis 8, **dadurch gekennzeichnet**, daß man als organisches Lösungsmittel einen niedermolekularen Alkohol, vorzugsweise Ethanol oder Methanol, verwendet.

10. Verfahren nach einem der Ansprüche 1 bis 9, **dadurch gekennzeichnet**, daß man eine Ultrafiltrationsmembran aus Polyethersulfon, Polyetherimid, Polysulfon oder Polyamid, gegebenenfalls jeweils im Gemisch mit Polyvinylpyrrolidon, verwendet.
